# EUROPEAN PATENT APPLICATION

(11) **EP 4 531 173 A1**
(43) Date of publication of application: **02.04.2025**
(21) Application number: 24202825.6
(22) Date of filing: 26.09.2024
(51) Int. Cl.: H01M 50/105, H01M 50/14, H01M 50/471, H01M 50/48, H01M 50/491, H01M 50/55

(54) **SECONDARY BATTERY**

(30) Priority: 26.09.2023 KR 20230129001
(71) Applicant: SAMSUNG SDI CO., LTD., Giheung-gu Yongin-si, Gyeonggi-do 17084 (KR)
(72) Inventor: Lee, Yoo Jung, 17084 Yongin-si, Gyeonggi-do (KR); Won, Jeong A, 17084 Yongin-si, Gyeonggi-do (KR); Jin, Su Kyung, 17084 Yongin-si, Gyeonggi-do (KR); Jee, Eun Seo, 17084 Yongin-si, Gyeonggi-do (KR); Hong, Seung Yoon, 17084 Yongin-si, Gyeonggi-do (KR); Lee, Ha Yan, 17084 Yongin-si, Gyeonggi-do (KR); Park, Ji Won, 17084 Yongin-si, Gyeonggi-do (KR); Choi, Hyeong Ho, 17084 Yongin-si, Gyeonggi-do (KR); Seok, Do Hyeong, 17084 Yongin-si, Gyeonggi-do (KR); Choi, Soo Bean, 17084 Yongin-si, Gyeonggi-do (KR)
(74) Representative: Gulde & Partner

(57) **Abstract**

A secondary battery (100, 200) includes an electrode assembly (110) including a positive electrode plate, a negative electrode plate, and a separator (113) disposed between the positive electrode plate and the negative electrode plate, wherein the electrode assembly (100) has a first end, a second end opposite the first end, a first side and a second side opposite the first side, a pouch (120) configured to surround the electrode assembly (100), and an inner support (150, 250) installed between the pouch (120) and the electrode assembly (100) to support the inside of the pouch (120).

## Description

### BACKGROUND

### 1. Field

Embodiments relate to a secondary battery that reduces or eliminates a phenomenon in which an end of the pouch is suctioned inward.

### 2. Description of the Related Art

In a secondary battery, a positive electrode, a negative electrode, and a separator interposed between the positive electrode and the negative electrode are wound or stacked to provide an electrode assembly and then are accommodated together with an electrolyte in a can or pouch to be sealed.

Generally, the electrode assembly includes a negative electrode plate on which a negative electrode active material layer is disposed on a thin film-shaped electrode current collector and a positive electrode plate on which a positive electrode active material layer is disposed on a thin film-shaped electrode current collector. A non-coating portion on which the active material layer is not disposed may be disposed on each of the negative electrode plate and the positive electrode plate, and then, the non-coating portion may be processed to provide a plurality of base material tabs. The plurality of base material tabs may be gathered to one side of the electrode assembly and welded to an external tab such as a strip terminal and then be bent to be inserted into the pouch.

Secondary batteries are manufactured in various shapes. Among them, a pouch-type secondary battery includes an electrode assembly provided by interposing a separator that is an insulator between a positive electrode plate and a negative electrode plate and a thin flexible pouch in which the electrode assembly is embedded. Here, the pouch may accommodate the electrode assembly in an inner space provided by bonding of an edge portion.

The pouch may be made of a material that is easily deformed, and if charging and discharging of the pouch-type secondary battery is repeated, an electrolyte within the pouch may be consumed to cause a phenomenon in which the pouch facing an end of the electrode assembly is suctioned in a direction toward the electrode assembly.

The above-described information disclosed in the technology that serves as the background of the present disclosure is only for improving understanding of the background of the present disclosure.

### SUMMARY

The invention is defined by the appended claims. The description that follows is subjected to this limitation. Any disclosure lying outside the scope of said claims is only intended for illustrative as well as comparative purposes.

Embodiments include a secondary battery including an electrode assembly, the electrode assembly including a positive electrode plate, a negative electrode plate, and a separator disposed between the positive electrode plate and the negative electrode plate, wherein the electrode assembly has a first end, a second end opposite the first end, a first side and a second side opposite the first side, a pouch configured to surround the electrode assembly and an inner support installed between the pouch and the electrode assembly to support the inside of the pouch.

In the present disclosure, "between" may mean that the inner support is arranged between at least regions or sections of the pouch and regions or sections of the electrode assembly. Accordingly, the inner support is arranged within a space marked by two boundaries formed by regions or sections of the pouch and regions or sections of the electrode assembly.

According to one embodiment, a space may be defined in the pouch and the electrode assembly may be accommodated in the pouch and may include a tab at the second end of the electrode assembly. The inner support may be disposed at the first end of the electrode assembly opposite to the second end, wherein the inner support and the electrode assembly may be in the pouch, and the inner support may include a porous material.

According to another embodiment, the inner support may be made of various materials such as a metal, a metal composite, an oxide, and a polymer.

According to another embodiment, the inner support may be made of porous sponge for impact absorption and gas movement.

According to another embodiment, the inner support may be made of a porous polymer.

According to another embodiment, a porous adhesive having pores may be applied to at least one of a front or rear surface of the inner support.

According to another embodiment, a cross-section of the inner support may be provided in a ' 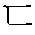 ' (or 'C' or 'U') shape (e.g., having squared or rounded corners).

According to another embodiment, the electrode assembly may include a tab at the second end of the electrode assembly, and the inner support may be at the first end of the electrode assembly, the direction being opposite to the tab.

According to another embodiment, the inner support may include a support body disposed to face the first end of the electrode assembly, a first wing member extending from a first end of the support body to surround part of one of a top surface and a bottom surface of the electrode assembly, and a second wing member extending from a second end of the support body opposite the first end to surround part of another surface of the top surface and the bottom surface of the electrode assembly.

According to another embodiment, the support body may be spaced apart from the first end of the electrode assembly to define an inner space.

According to another embodiment, a first connection portion between the support body and the first wing member may have a curved surface, and a second connection portion between the support body and the second wing member may have a curved surface.

According to another embodiment, an inner space may be defined between the inner support and the first end of the electrode assembly.

According to another embodiment, the inner support may be installed in a shape that surrounds part of the first end of the electrode assembly.

Embodiments include a secondary battery, the secondary battery including a pouch in which a space is defined, an electrode assembly accommodated in the pouch and including a positive electrode plate, a negative electrode plate, a separator between the positive electrode plate and the negative electrode plate, and a tab at a second end of the electrode assembly, and an inner support at a first end of the electrode assembly opposite to the second end, wherein the inner support and the electrode assembly are in the pouch, and wherein the inner support includes a porous material.

According to another embodiment, the electrode assembly may include a positive electrode lead tab in contact with the positive electrode plate at the second end of the electrode assembly, the positive electrode lead tab protruding outside of the pouch, and a negative electrode lead tab in contact with the negative electrode plate at the second end of the electrode assembly, the negative electrode lead tab protruding outside of the pouch.

According to another embodiment, the porous material may include one of porous alumina, porous silica, porous ceramic, a porous polymer, a porous metal, a porous nanomaterial, a porous sponge, and a porous synthetic resin.

According to another embodiment, the inner support may be between the pouch and the first end of the electrode assembly, and the inner support may support the inside of the pouch and may be made of a porous material defining a space therein.

According to another embodiment, the inner support may include an adhesive layer adhering to the first end of the electrode assembly, and a shape maintaining part fixed to the adhesive layer and made of a porous material.

According to another embodiment, the adhesive layer may include one of a thermosetting adhesive, a silicone adhesive, an acrylate adhesive, a urethane adhesive, a resin, and a rubber adhesive.

According to another embodiment, the adhesive layer may have an area less than or equal to that of the first end of the electrode assembly.

According to another embodiment, a surface of the shape maintaining part in contact with the adhesive layer may be a flat surface, and a surface of the shape maintaining part facing the pouch may include at least one of a flat surface and a curved surface.

According to another embodiment, the shape maintaining part may include an inner hole to guide movement of an electrolyte.

According to another embodiment, the inner hole may have one of a circular shape, an oval shape, and a cross shape.

According to another embodiment, the inner hole may be in a width direction of the shape maintaining part.

According to another embodiment, the inner support may adhere to at least a partial area on one surface of the electrode assembly.

According to another embodiment, the inner support and a partial area of the pouch may adhere to each other.

### BRIEF DESCRIPTION OF THE DRAWINGS

Features will become apparent to those of ordinary skill in the art by describing in detail exemplary embodiments with reference to the attached drawings, in which:
FIG. 1 illustrates a perspective view of a secondary battery according to one or more embodiments;
FIG. 2 illustrates an exploded perspective view of the secondary battery according to one or more embodiments;
FIG. 3 illustrates a perspective view of a state in which an inner support is separated from an electrode assembly according to one or more embodiments;
FIG. 4 illustrates a side cross-sectional view of the secondary battery according to one or more embodiments;
FIG. 5 illustrates a side cross-sectional view of a secondary battery according to one or more embodiments;
FIG. 6 illustrates a perspective view of an inner support according to one or more embodiments; and
FIGS. 7 to 10 illustrate perspective views of an inner hole defined in a shape maintaining part according to one or more embodiments.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that if a layer or element is referred to as being "on" another layer or substrate, it can be directly on the other layer or substrate, or intervening layers may also be present. Further, it will be understood that if a layer is referred to as being "under" another layer, it can be directly under, and one or more intervening layers may also be present. In addition, it will also be understood that if a layer is referred to as being "between" two layers, it can be the only layer between the two layers, or one or more intervening layers may also be present. Like reference numerals refer to like elements throughout.

As used herein, the term "and/or" includes any and all combinations of one or more of the associated listed items. In this specification, it will also be understood that if a member A is referred to as being connected to a member B, the member A can be directly connected to the member B or indirectly connected to the member B with a member B therebetween.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise" and/or "comprising" used in this specification neither define the mentioned shapes, numbers, processes, operations, members, elements, and/or groups of these, nor exclude the presence or addition of one or more other different shapes, numbers, processes, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below", "beneath", "lower", "above", "upper" and the like, used herein for ease of description to describe one element or feature's relationship to another element(s) or feature(s) as illustrated in the figures. These spatially relative terms are intended for easy comprehension of the prevent disclosure according to various process states or usage states of the prevent disclosure, and thus, the present disclosure is not limited thereto. For example, an element or feature shown in the drawings is turned inside out, the element or feature described as "beneath" or "below" may change into "above" or "upper". Thus, the term "below" may encompass the term "above" or "below".

Here, throughout the specification, parts having similar configurations and operations are denoted by the same reference numerals. Also, in this specification below, if any portion is referred to as being "electrically connected" to another portion, it should be understood that the former can be "directly connected" to the latter, or "connected" to the latter via an intervening member.

Hereinafter, embodiments of the present disclosure will be described in detail with reference to the accompanying drawings so that those of ordinary skill in the art can easily implement the present disclosure.

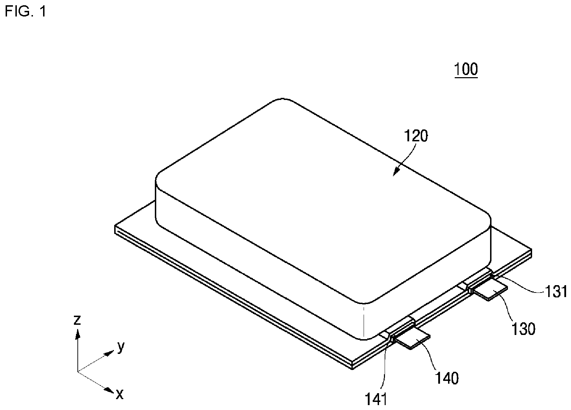

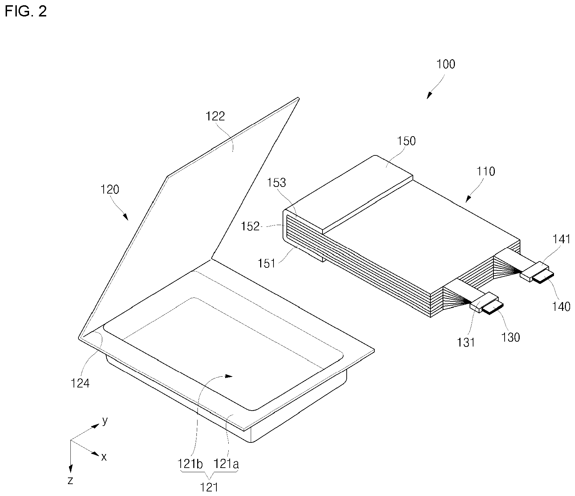

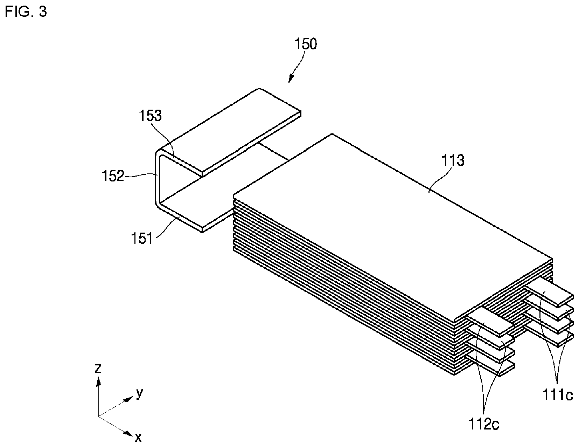

FIG. 1 illustrates a perspective view of a secondary battery 100 according to one or more embodiments, FIG. 2 illustrates an exploded perspective view of the secondary battery 100 according to one or more embodiments, and FIG. 3 illustrates a perspective view of a state in which an inner support 150 is separated from an electrode assembly 110 according to one or more embodiments.

As illustrated in FIGS. 1 to 3, the secondary battery 100 may include an electrode assembly 110, a case, and an inner support 150. In some embodiments, the secondary battery 100 may further include at least one of a positive electrode lead tab 130, a negative electrode lead tab 140, a first insulating tape 141, and a second insulating tape 131. The secondary battery 100 according to embodiments may add the inner support 150 in an inner space defined between the electrode assembly 110 and the pouch 120 to suppress a phenomenon in which a lower portion of the pouch 120 is suctioned inward.

The inner support 150 may be made of various materials such as a metal, a metal composite, an oxide, and a polymer. A cross-section of the inner support 150 may be provided in a ' 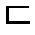 ' (or 'C') shape (e.g., having squared or rounded corners) including a support body 152, a first wing member 151 and a second wing member 153, and may be modified into various shapes, including a rectangular shape if necessary.

The inner support 150 may be made of porous sponge for impact absorption and gas movement. In some embodiments, the inner support 150 may be made of a porous polymer, and a porous adhesive having pores may be applied to at least one of a front or rear surface of the inner support 150. In some embodiments, there may or may not be an empty space between the electrode assembly 110 and the inner support 150.

The electrode assembly 110 may be provided in a stacked type in which the negative electrode plate, the positive electrode plate, and the separator 113 may be alternately stacked or provided in a roll shape in which the negative electrode, the positive electrode, and the separator 113 are wound. The electrode assembly 110 according to one or more embodiments of the present disclosure may be accommodated in the pouch 120 and may be provided with the positive electrode plate, the negative electrode plate, and the separator disposed between the positive electrode plate and the negative electrode plate, and the tab may be disposed in one direction.

The electrode assembly 110 may be accommodated inside the pouch 120 together with the electrolyte. The electrolyte may include an organic solvent such as ethylene carbonate (EC), propylene carbonate (PC), diethyl carbonate (DEC), ethyl methyl carbonate (EMC), and dimethyl carbonate (DMC), and lithium salt such as LiPF₆ or LiBF₄.

The electrode assembly 110 may include the negative electrode plate as a first electrode plate, the positive electrode plate as a second electrode plate, and the separator 113 disposed between the negative electrode plate and the positive electrode plate. The positive electrode plate may include a positive electrode lead tab 130 electrically connected to a positive electrode non-coating portion 112c, and the negative electrode plate may include a negative electrode lead tab 140 electrically connected to a negative electrode non-coating portion 111c. The negative electrode lead tab 140 and the positive electrode lead tab 130 may be electrically connected to the outside by being welded to negative and positive electrode leads of an external terminal. A first insulating tape 141 for insulating from the pouch 120 may be attached to the negative electrode lead tab 140, and a second insulating tape 131 may be attached to the positive electrode lead tab 130 for insulating from the pouch 120.

The positive electrode plate may be made of aluminum (Al), and at least one surface of the positive electrode plate may be coated with a positive electrode active material made of transition metal oxide. In some embodiments, the positive electrode non-coating portion 112c that is not coated with a positive electrode active material may be provided at one side of the positive electrode plate.

The negative electrode plate may be made of copper (Cu) or nickel (Ni), and at least one surface of the negative electrode plate may be coated with a negative electrode active material such as graphite or carbon. In some embodiments, the negative electrode non-coating portion 111c that is not coated with a negative electrode active material may be provided at one side of the negative electrode plate.

The separator 113 may be made of polyethylene (PE) or polypropylene (PP), but the embodiments are not limited thereto. The separator 113 may prevent electrical shorts between the positive electrode plate and the negative electrode plate from occurring to allow lithium ions to move freely.

The pouch 120 may have a space defined therein and may be modified into various shapes within the technical idea of surrounding the electrode assembly 110. The pouch 120 may be made of a soft film. The pouch 120 may be provided by folding a rectangular film extending in a first direction x to provide a case body 121 and a case cover 122.

The pouch 120 according to one or more embodiments of the present disclosure may include the case body 121, which may include a connection film 123, the case cover 122, and a folding part 124. After the electrode assembly 110 is accommodated in a recess 121b provided in the case body 121, the case cover 122 may rotate around the folding part 124 and may be coupled to the case body 121 and be sealed.

In some embodiments, the case cover 122, which may be a rectangular film extending in the first direction x when sealed, may rotate with respect to the folding part 124 extending in a second direction y that is a width direction of the pouch 120, which is perpendicular to the first direction x. In other embodiments, the case body 121 and the case cover 122 may be provided as individual members. In some embodiments, the folding part 124 may not be provided. In some embodiments, the pouch 120 may not be limited to the integrated type in which the case body 121 and the case cover 122 are provided on a single film. However, hereinafter, for convenience of explanation, an example in which the case body 121 and the case cover 122 are disposed on one rectangular film will be described.

In one or more embodiments, the case body 121 may include the recess 121b and a sealing part 121a. The case body 121 may be provided with the recess 121b in which the electrode assembly 110 is accommodated approximately at a center thereof and may include the sealing part 121a extending approximately outward from three sides of the recess 121b. In some embodiments, the sealing part 121a may extend outward from four sides of the recess 121b.

The sealing part 121a may be a surface parallel to and coupled to the case cover 122. For example, if the case body 121 and the case cover 122 are provided as individual members, the sealing part 121a may also be provided on an area on which the folding part 124 is disposed. In some embodiments, even if the case body 121 and the case cover 122 are integrated with each other, the sealing part 121a may also be provided on the case body 121 adjacent to the folding part 124. However, for convenience of explanation, a case in which the sealing part 121a is not provided on the case body 121 adjacent to the folding part 124 will be described.

The case cover 122 and the case body 121 may be made of a multi-layer thin film constituted by a metal thin film and an insulating layer disposed on each of one surface and the other (opposite) surface of the metal thin film. The case cover 122 and the case body 121 may define a surface on which the case cover 122 and the case body 121 may be in contact with each other as an inner surface, and an opposite surface as an outer surface.

The recess 121b of the case body 121 may be sized such that the electrode assembly 110 is capable of being accommodated through press or drawing processing. In the case body 121, after a portion in which the recess 121b is defined is covered by the case cover 122, an outer edge of the recess 121b and an outer edge of the case cover 122 may be thermally fused to each other. In the pouch 120, after the electrode assembly 110 is accommodated in the recess 121b, an edge area of the case body 121 and an edge area of the case cover 122 may be sealed to each other.

For convenience, the edge of the case body 121, which is disposed outside on a plane with respect to a center of the recess 121b that is sealed with the edge of the case cover 122, may be defined as the sealing part 121a. An inner surface of the pouch 120 may be provided as a thermally fused layer that is made of a thermally fusible material.

The case cover 122 may have a rectangular flat shape. The case cover 122 may be connected to the case body 121 through the folding part 124. The case cover 122 may cover an upper portion of the case body 121.

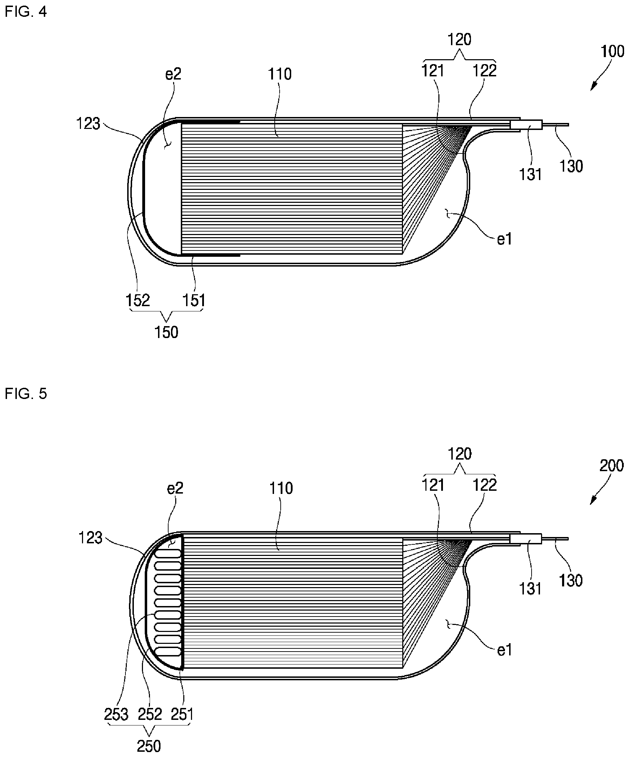

FIG. 4 illustrates a side cross-sectional view of the secondary battery according to one or more embodiments. As illustrated in FIGS. 2 and 4, the inner support 150 may be installed between the pouch 120 and the electrode assembly 110 and may be modified into various shapes within the technical idea of supporting the inside of the pouch 120. The inner support 150 may cover one surface (e.g., a top surface) of the electrode assembly 110 and at least a portion of a side surface of the case body 121 of the electrode assembly 110 extending from the one surface. Here, the one surface of the electrode assembly 110 may be an end of the electrode assembly 110 on which a terminal of the electrode assembly 110 is disposed at an opposite position. The inner support 150 may have an area larger than that of the one surface of the electrode assembly 110.

In the secondary battery 100 according to one or more embodiments of the present disclosure, the tab 130 may be disposed in a direction of one end of the electrode assembly 110, and the inner support 150 may be disposed in a direction of the other (opposite) end of the electrode assembly 110, which is a direction opposite to the tab. The inner support 150 may be installed in a shape that surrounds the other end of the electrode assembly 110. In some embodiments, an inner space may be defined between the inner support 150 and the other end of the electrode assembly 110.

The inner support 150 according to one or more embodiments of the present disclosure may include a support body 152 facing the other end of the electrode assembly 110, a first wing member 151 extending from one end of the support body to surround one surface (e.g., a top or bottom surface of the electrode assembly 110 as shown in FIG. 4) of the electrode assembly 110, and a second wing member 153 extending from the other (opposite) end of the support body 152 to surround the other surface of the electrode assembly 110 (e.g., the other of the top or bottom surface of the electrode assembly 110 as shown in FIG. 4).

The pouch 120 facing the inner support 150 may provide a connection film 123. The connection film 123 may function to connect the case cover 122 to the case body 121. The connection film 123 may be made of a material having the same ductility as that of the pouch 120.

The support body 152 may be spaced apart from the other end of the electrode assembly 110 to define the inner space. A second space e2 may be defined between the inner support 150 including the support body 152 and the other end of the electrode assembly 110, and a first space e1 that is opposite to the second space e2 may be defined between the electrode assembly 110 and the pouch 120.

For example, a connection portion between the support body 152 and the first wing member 151 may be provided as a curved surface as shown in FIG. 4, and a connection portion between the support body 152 and the second wing member 153 may be provided as a curved surface as shown in Fig. 4. If the connection film 123 is in contact with the inner support 150, the curved surface of the inner support 150 may be in contact with the connection film 123 to prevent the connection film 123 from being damaged.

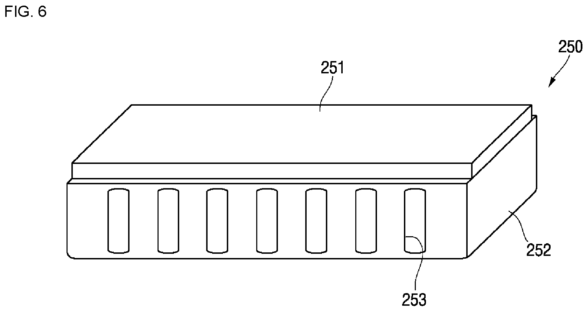

FIG. 5 illustrates a side cross-sectional view of a secondary battery according to one or more embodiments, and FIG. 6 illustrates a perspective view of an inner support according to one or more embodiments. As illustrated in FIGS. 5 and 6, an inner support 250 may be disposed at the other end of an electrode assembly 110, which is opposite to a tab 130, and may be variously modified within the technical idea of being accommodated in a pouch 120 together with the electrode assembly 110. The inner support 250 may be made of a porous material. In some embodiments, the inner support 250 may have pores defined using a porous polymer or a porous adhesive. In other embodiments, the inner support 250 may be made of porous alumina, ceramic such as silica, a porous polymer material such as polypropylene (PP), a porous synthetic resin, or the like. Because pores exist in the inner support 250, an electrolyte may easily move. In some embodiments, because a portion of the electrolyte exists within each of the pores, a lifespan of the secondary battery 100 may increase. A pore shape defined in the inner support 250 may be generated randomly or regularly.

In some examples, the inner support 250 may include any one of porous alumina, porous silica, porous ceramic, a porous polymer, a porous metal, a porous nanomaterial, porous sponge, a porous synthetic resin, and a porous polymer.

Porous alumina may have excellent fire resistance and corrosion resistance and may be used as an electrical insulator. Porous silica may have a high surface area and may be used as a catalyst carrier or used as a separator and for filtering and adsorption. Porous ceramics may be used as thermal and electrical insulators and may be used in environments in which fire resistance and corrosion resistance are required. Porous polymers may be lightweight and chemically stable and may be used in various fields such as medical materials, separators, and sound absorbing materials. Porous metals may be used as solid catalysts or gas adsorption materials and may also act as catalysts in chemical reactions. Porous nanomaterials may be nano-structured porous materials that have special physical and chemical properties and may be used in catalysts, sensors, and medical applications.

The inner support 250 according to one or more embodiments of the present disclosure may be disposed between the pouch 120 and the electrode assembly 110. In some embodiments, the inner support 250 may be made of a porous material that supports the inside of the pouch 120 and defines a space therein. The inner support 250 may include an adhesive layer 251 adhering to the other end of the electrode assembly 110 and a shape maintaining part 252 fixed to the adhesive layer 251 and made of a porous material.

The adhesive layer 251 according to one or more embodiments of the present disclosure may include one of a thermosetting adhesive, a silicone adhesive, an acrylate adhesive, a urethane adhesive, a resin, and a rubber adhesive.

The thermosetting adhesive may be an adhesive that is cured by influences of heat and time and may have high resistance to the electrolyte. The epoxy adhesive may belong to the thermosetting adhesive and may maintain stability against the electrolyte.

The silicone adhesive may have high chemical stability and thus may be used in a variety of environments. The silicone adhesive may have little interaction with the electrolyte to maintain stable attachment.

The acrylic adhesive may have a fast curing speed and excellent heat resistance and may be made of a chemically stable material.

The urethane adhesive may have excellent heat resistance and chemical resistance, but some types of urethane adhesives may have limited interaction with the electrolyte.

The rubber adhesive may be flexible and have high chemical resistance and thus may be used in a variety of environments. There may also be a rubber adhesive that has less interaction with the electrolyte.

The adhesive layer 251 may have an area less than or equal to that of the other end of the electrode assembly 110. In some embodiments, the adhesive layer 251 may be prevented from protruding to the outside of the other end of the electrode assembly 110 and interfering with the pouch 120 including a connection film 123.

The adhesive layer 251 may adhere to the electrode assembly 110, and the shape maintaining part 252 may be installed successively on the adhesive layer 251. The shape maintaining part 252 may have a surface that is in contact with the adhesive layer 251 as a flat surface, and a surface that faces the pouch 120 may include at least one of a flat surface and a curved surface. Because the shape maintaining part 252 that is in contact with the connection film 123 provides a curved surface, damage of the connection film 123 may be minimized.

The inner support 250 may adhere to at least a partial area of one surface of the electrode assembly 110 (e.g., the other end of the electrode assembly). The adhesion may be performed on the entire adhesive layer 251. In some embodiments, the adhesion may be performed only on a partial area of the adhesive layer 251. In some embodiments, the adhesion may be performed in a state in which the adhesive layer 251 has an area less than that of the other end of the electrode assembly 110.

In some embodiments, some areas of the inner support 250 and the pouch 120 may adhere to each other. If the inner support 250 is installed in a shape protruding toward a rear side of the electrode assembly (left side in FIG. 5, which is also referred to herein as "the other end" of the electrode assembly 110), an upper portion of the electrode assembly and a portion of the connection film 123 may adhere to each other, and thus, the inner support 250 may be more stably fixed inside the pouch 120.

The inner support 250 may be provided approximately in a rectangular parallelepiped shape as shown in FIG. 6, and an edge facing the pouch 120 may be curved in a shape corresponding to the curved surface of the pouch 120. In some embodiments, the damage that may occur if the pouch 120 is in contact with the inner support 250 may be prevented.

In the secondary battery 100 according to one or more embodiments of the present disclosure, the inner support 250 may be installed between the pouch 120 and the electrode assembly 110 and have a set volume, and thus, a phenomenon in which an end of the pouch is suctioned inward due to reduction of the electrolyte may be minimized. In some embodiments, because the electrolyte easily moves through an inner hole 253 provided in the inner support 250, the suctioning phenomenon of the pouch 120 may be prevented without affecting performance of the secondary battery 100.

As illustrated in FIG. 6, the inner hole 253 may have an oval or rectangular shape extending in a vertical direction and may define a hole in a width direction of the shape maintaining part 252. The shape maintaining part 252 may be provided in plurality, and a distance between the inner hole 253 and an adjacent inner hole 253 may be spaced a set interval from each other.

The inner hole 253 may have various shapes within the technical idea of guiding the movement of the electrolyte. The inner hole 253 may define a hole in the width direction of the shape maintaining part 252. In some embodiments, the inner hole 253 may be modified in various manners, such as forming the hole that is not only in the width direction of the shape maintaining part 252, but also in a longitudinal direction of the shape maintaining part 252. In some embodiments, the inner hole 253 may define a hole having one of a circular shape, an oval shape, or a cross shape.

The inner hole 253 may be designed to facilitate the movement of the electrolyte. The electrolyte may flow through the inner hole 253, which may be necessary to induce an electrochemical reaction inside the battery.

In some embodiments, the inner hole 253 may serve to extend a lifespan of the battery by allowing moisture to be permeated into the electrolyte. The electrolyte may be guided into the inner hole 253 to support the secondary battery 200 and provide stability over a long period of time. The inner hole 253 may be generated randomly or regularly.

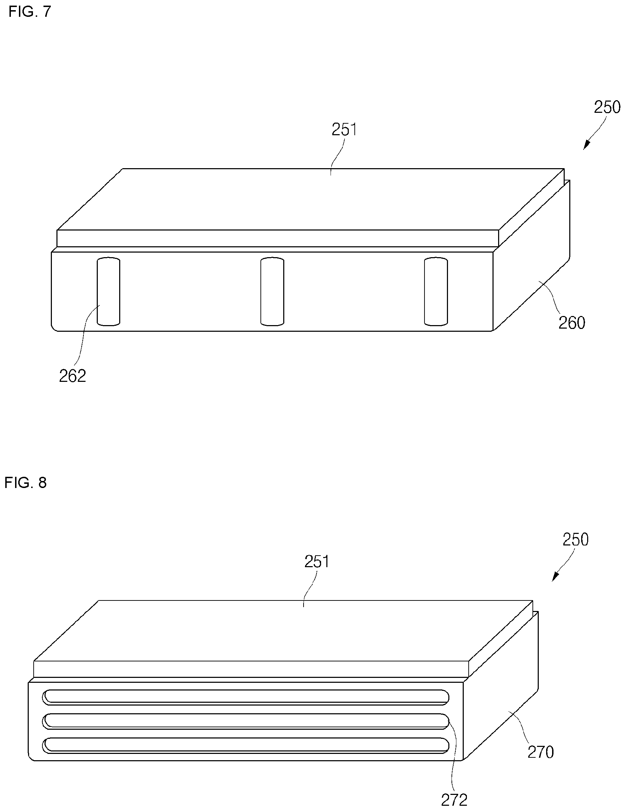

FIG. 7 illustrates a perspective view of an inner hole 262 defined in a shape maintaining part 260 according to one or more embodiments. As illustrated in FIG. 7, the inner hole 262 may be defined at each of both sides and a center of the shape maintaining part 260 in a longitudinal direction (left and right direction in FIG. 7). The inner hole 262 may have a circular or oval shape and may define a hole in the width direction (front and back direction in FIG. 7) of the shape maintaining part 260.

FIG. 8 illustrates a perspective view of an inner hole 272 defined in a shape maintaining part according to one or more embodiments. As illustrated in FIG. 8, the inner hole 272 may be defined in the shape maintaining part 270 in a longitudinal direction (left and right direction in FIG. 8). The inner hole 272 may be a slit-shaped hole that is thin and elongated to extend in the longitudinal direction, and the inner hole 272 may extend in a width direction (front and back direction in FIG. 8) of the shape maintaining part 270. In some embodiments, the inner hole 272 may provide a plurality of rows in the shape maintaining part 270.

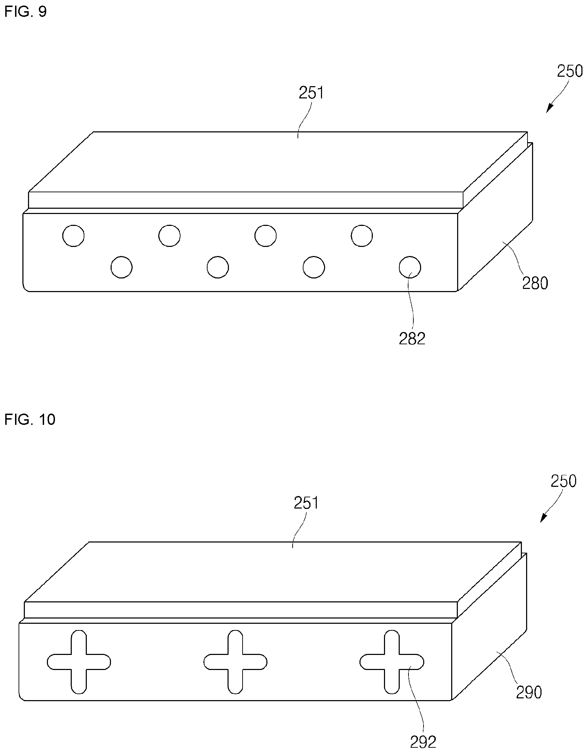

FIG. 9 illustrates a perspective view of an inner hole 282 defined in a shape maintaining part 280 according to one or more embodiments. As illustrated in FIG. 9, a circular inner hole 282 may be disposed in a zigzag shape in a side surface of the shape maintaining part 280, and the inner hole 282 may extend in a width direction (front and back direction in FIG. 9) of the shape maintaining part 280.

FIG. 10 illustrates a perspective view of an inner hole 292 defined in a shape maintaining part 290 according to one or more embodiments. As illustrated in FIG. 10, inner holes 292 defining cross-shaped holes may be installed in a side surface of the shape maintaining part 290 so as to be spaced apart from each other. The inner holes 292 may be disposed at set intervals in a longitudinal direction (left and right direction in FIG. 10) of the shape maintaining part 290, and the inner holes 292 may extend in a width direction of the shape maintaining part 290.

In the secondary battery according to various embodiments of the present disclosure, because the inner support is installed between the pouch and the electrode assembly and has the set volume, the phenomenon in which the end of the pouch is suctioned inward due to the reduction of the electrolyte may be minimized.

In the secondary battery according to various embodiments, because the electrolyte easily moves through the inner hole defined in the inner support, the phenomenon in which the pouch is suctioned may be prevented from occurring without affecting the performance of the secondary battery.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of ordinary skill in the art that various changes in form and details may be made without departing from the scope of the present invention as set forth in the following claims.

## Claims

1. A secondary battery (100, 200), comprising:
an electrode assembly (110) including a positive electrode plate, a negative electrode plate, and a separator (113) disposed between the positive electrode plate and the negative electrode plate, wherein the electrode assembly (110) has a first end, a second end opposite the first end, a first side and a second side opposite the first side;
a pouch (120) configured to surround the electrode assembly (110); and
an inner support (150, 250) installed between the pouch (120) and the electrode assembly (110) to support the inside of the pouch (120).

2. The secondary battery (100, 200) of claim 1, wherein:
a space is defined in the pouch (120);
the electrode assembly (110) is accommodated in the pouch (120) and includes a tab (130, 140) at the second end of the electrode assembly (110); and wherein
the inner support (150, 250) is disposed at the first end of the electrode assembly (110) opposite to the second end, wherein the inner support (150, 250) and the electrode assembly (110) are in the pouch (120), and wherein the inner support (150, 250) includes a porous material.

3. The secondary battery (100, 200) as claimed in claim 2, wherein the porous material includes one of porous alumina, porous silica, porous ceramic, a porous polymer, a porous metal, a porous nanomaterial, a porous sponge, and a porous synthetic resin.

4. The secondary battery (100, 200) as claimed in any one of claims 1 to 3, wherein:
the electrode assembly (110) includes a tab (130, 140) at the second end of the electrode assembly (110), and
the inner support (150, 250) is disposed at the first end of the electrode assembly (110), which is a direction opposite to the tab (130, 140).

5. The secondary battery (100, 200) as claimed in any one of claims 1 to 4, wherein the inner support (150, 250) includes:
a support body (152) disposed to face the first end of the electrode assembly (110);
a first wing member (151) extending from a first end of the support body (152) to surround part of one of a top surface and a bottom surface of the electrode assembly (110); and/or
a second wing member (153) extending from a second end of the support body (152) opposite the first end to surround part of another of the top surface and the bottom surface of the electrode assembly (110).

6. The secondary battery (100, 200) as claimed in claim 5, wherein the support body (152) is spaced apart from the first end of the electrode assembly (110) to define an inner space (e2), and/or
wherein a first connection portion between the support body (152) and the first wing member (151) has a curved surface, and a second connection portion between the support body (152) and the second wing member (153) has a curved surface.

7. The secondary battery (100, 200) as claimed in any one of claims 1 to 6, wherein an inner space (e2) is defined between the inner support (150, 250) and the first end of the electrode assembly (110), and/or
wherein the inner support (150, 250) is installed in a shape that surrounds part of the first end of the electrode assembly (110).

8. The secondary battery (100, 200) as claimed in any one of claims 1 to 7, wherein the electrode assembly (110) includes:
a positive electrode lead tab (130) in contact with the positive electrode plate at the second end of the electrode assembly (110), the positive electrode lead tab (130) protruding outside of the pouch (120); and
a negative electrode lead tab (140) in contact with the negative electrode plate at the second end of the electrode assembly (110), the negative electrode lead tab (140) protruding outside of the pouch (120).

9. The secondary battery (100, 200) as claimed in any one of claims 1 to 8, wherein:
the inner support (150, 250) is between the pouch (120) and the first end of the electrode assembly (110), and
the inner support (150, 250) supports the inside of the pouch (120) and is made of a porous material defining a space therein.

10. The secondary battery (100, 200) as claimed in any one of claims 1 to 9, wherein:
the inner support (150, 250) includes an adhesive layer (251) adhering to the first end of the electrode assembly (110) and a shape maintaining part (252, 260, 270, 280, 290) fixed to the adhesive layer (251) and made of a porous material; and/or
the inner support (150, 250) adheres to at least a partial area on one surface of the electrode assembly (110); and/or
the inner support (150, 250) and a partial area of the pouch (120) are adhered to each other.

11. The secondary battery (100, 200) as claimed in claim 10, wherein the adhesive layer (251) includes one of a thermosetting adhesive, a silicone adhesive, an acrylate adhesive, a urethane adhesive, a resin, and a rubber adhesive.

12. The secondary battery (100, 200) as claimed in claim 10 or 11, wherein the adhesive layer (251) has an area less than or equal to that of the first end of the electrode assembly (110).

13. The secondary battery (100, 200) as claimed in any one of claims 10 to 12, wherein:
a surface of the shape maintaining part (252, 260, 270, 280, 290) in contact with the adhesive layer (251) is a flat surface, and/or
a surface of the shape maintaining part (252, 260, 270, 280, 290) facing the pouch (120) includes at least one of a flat surface and a curved surface.

14. The secondary battery (100, 200) as claimed in any one of claim 10 to 13, wherein the shape maintaining part (252, 260, 270, 280, 290) includes an inner hole (253, 262, 272, 282, 292) to guide movement of an electrolyte.

15. The secondary battery (100, 200) as claimed in claim 14, wherein the inner hole (253, 262, 272, 282, 292) has one of a circular shape, an oval shape, and a cross shape, and/or wherein the inner hole (253, 262, 272, 282, 292) is in a width direction of the shape maintaining part (252, 260, 272, 280, 290).
